# EUROPÄISCHE PATENTSCHRIFT

(11) **EP 1 232 879 B1**
(45) Veröffentlichungstag und Bekanntmachung des Hinweises auf die Patenterteilung: **17.08.2005**
(21) Anmeldenummer: 01130377.3
(22) Anmeldetag: 20.12.2001
(51) Int. Cl.: B42C 19/08, B65H 5/16

(54) **Einfuhrvorrichtung zum Transportieren von Buchblöcken in eine Folgemaschine**
Introducing means for conveying book blocks in a binding machine
Dispositif d'introduction pour transporter des blocs de livres dans une machine à relier

(30) Priorität: 15.02.2001 DE 10107475
(43) Veröffentlichungstag der Anmeldung: 21.08.2002
(73) Patentinhaber: Wohlenberg Buchbindesysteme GmbH, 27283 Verden (DE)
(72) Erfinder: Schneider, Hans-Joachim, 27283 Verden (DE); Flammann, Uwe, 27308 Kirchlinteln (DE)
(74) Vertreter: Patentanwälte Thömen & Körner

(56) Entgegenhaltungen:
- DE-A- 3 445 928
- DE-A- 3 840 816

## Beschreibung

Die Erfindung betrifft eine Einfuhrvorrichtung zum Transportieren von Buchblöcken in eine Folgemaschine nach dem Oberbegriff des Anspruchs 1.

Die aus einzelnen Blättern oder Lagen bestehenden ungebundenen Buchblöcke werden aus einer Vormaschine, beispielsweise einer Zusammentragmaschine, in eine Folgemaschine, beispielsweise eine Klebebindemaschine, mittels eines Übergabesystems befördert.

Der Transport der Buchblöcke in der Zusammentragmaschine und in der Einfuhrvorrichtung der Klebebindemaschine erfolgt bekanntlich über an umlaufend angetriebenen Förderketten angelenkten Mitnehmerleisten, die sich hinter die Buchblöcke legen und diese in aufrechter Position unter Abstützung des Buchblockrückens auf einer Blockauflage verschieben.

Das zwischen der Zusammentragmaschine und der Klebebindemaschine angeordnete Übergabesystem befördert die Buchblöcke auf eine Auflage im Einlaufbereich der Klebebindemaschine, von wo die Buchblöcke dann von den Mitnehmerleisten der Förderkette hintergriffen und weiter befördert werden.

Zusammentragmaschine, Übergabesystem und Klebebindemaschine sind bei diesem Vorgang synchron getaktet. Eine Vorrichtung der oben genannten Art ist aus DE-A- 384 0816 bekannt.

Probleme treten auf, wenn die Transportgeschwindigkeit an der Vormaschine oder am Übergabesystem aufgrund von Störungen heruntergefahren werden muss. Beim Auftreten einer Störung in der Zusammentragmaschine muss diese beispielsweise unverzüglich zum Stehen gebracht werden. Für die Klebebindemaschine wirkt sich ein plötzliches Anhalten aber äußerst nachteilig aus, weil die Buchblöcke, die sich zu diesem Zeitpunkt in bestimmten Arbeitsstationen befinden, unbrauchbar werden oder es beim Wiederanlauf der Maschinen zu Folgestörungen kommt.

Zweckmäßigerweise muss die Klebebindemaschine daher mit zumindest geringerer Geschwindigkeit weiterlaufen. Dabei geht aber die Synchronisation der Maschinen verloren. Nachteilig daran ist, dass für ein taktsynchrones Wiederzuschalten der Zusammentragmaschine zunächst die Transportgeschwindigkeiten der Maschinen wieder angepasst werden müssen, was wegen der Massenträgheit eine gewisse Zeit benötigt. Wenn sich außerdem im Zeitpunkt der Störung ein Buchblock nur teilweise auf der Auflage im Einlaufbereich der Einfuhrvorrichtung befindet, besteht die Gefahr, dass der Buchblock beim Anhalten oder Wiederanfahren beschädigt wird.

Der Erfindung liegt daher die Aufgabe zugrunde, eine Einfuhrvorrichtung der eingangs genannten Art derart zu verbessern, dass nach Beheben einer Störung ein synchron getaktetes Transportieren von Buchblöcken aus einer Vormaschine in eine Folgemaschine ohne Beschädigungsgefahr von in der Einfuhrvorrichtung befindlicher oder gerade ein- oder auslaufender Buchblöcke möglich ist.

Diese Aufgabe wird bei einer Einfuhrvorrichtung der eingangs genannten Art mit den Merkmalen des Anspruchs 1 gelöst. Weiterbildungen und vorteilhafte Ausgestaltungen ergeben sich aus den Unteransprüchen.

Erfindungsgemäß ist die Förderkette im Einlaufbereich der Einfuhrvorrichtung der Folgemaschine reversibel in eine nach unten abgewinkelte Position kippbar, so dass die Mitnehmerleisten in diesem Bereich unterhalb der Auflage weiterlaufen.

Dadurch wird erreicht, dass eine Störung an der Vormaschine oder am Übergabesystem keinen Einfluss auf die Folgemaschine hat, da beim Auftreten einer Störung die Förderkette im Einlaufbereich der Einfuhrvorrichtung nach unten kippbar ist.

Dies hat den Vorteil, dass Buchblöcke, die sich bereits in der Folgemaschine befinden, wie gewohnt die Arbeitsstationen durchlaufen und nicht unbrauchbar werden. Außerdem sind Folgestörungen durch nicht weitertransportierte Buchblöcke in der Folgemaschine ausgeschlossen.

Außerdem werden Buchblöcke, die aufgrund der Störung nicht vollständig auf die Auflage im Einlaufbereich der Einfuhrvorrichtung befördert worden sind, nicht mehr durch die Mitnehmerleisten zerrissen, weil diese nunmehr unterhalb der Auflage weiterlaufen.

Nach Beheben der Störung und Wiederanlaufen der Vormaschine ist die Förderkette taktsynchron in ihre ursprüngliche Position kippbar.

Eine Weiterbildung sieht vor, dass die Förderkette bei einer an der Vormaschine oder am Übergabesystem auftretenden Störung automatisch in die nach unten abgewinkelte Position kippbar und nach Beseitigung der Störung auch automatisch in ihre ursprüngliche, synchron getaktete Position bringbar ist.

Dadurch wird ein störungsfreier taktsynchroner Arbeitsablauf sichergestellt.

Eine vorteilhafte Ausgestaltung der Erfindung sieht vor, dass die Auflage im Einlaufbereich der Einfuhrvorrichtung Öffnungen aufweist, durch die die Mitnehmerleisten beim Kippen der Förderkette hindurchtreten können.

Nachfolgend wird die Erfindung anhand eines Ausführungsbeispiels erläutert, das in der Zeichnung dargestellt ist. In dieser zeigen:
- Fig. 1: eine schematische Seitenansicht der erfindungsgemäßen Einfuhrvorrichtung in ursprünglicher Position und
- Fig. 2: eine schematische Seitenansicht der erfindungsgemäßen Einfuhrvorrichtung in abgewinkelter Position.

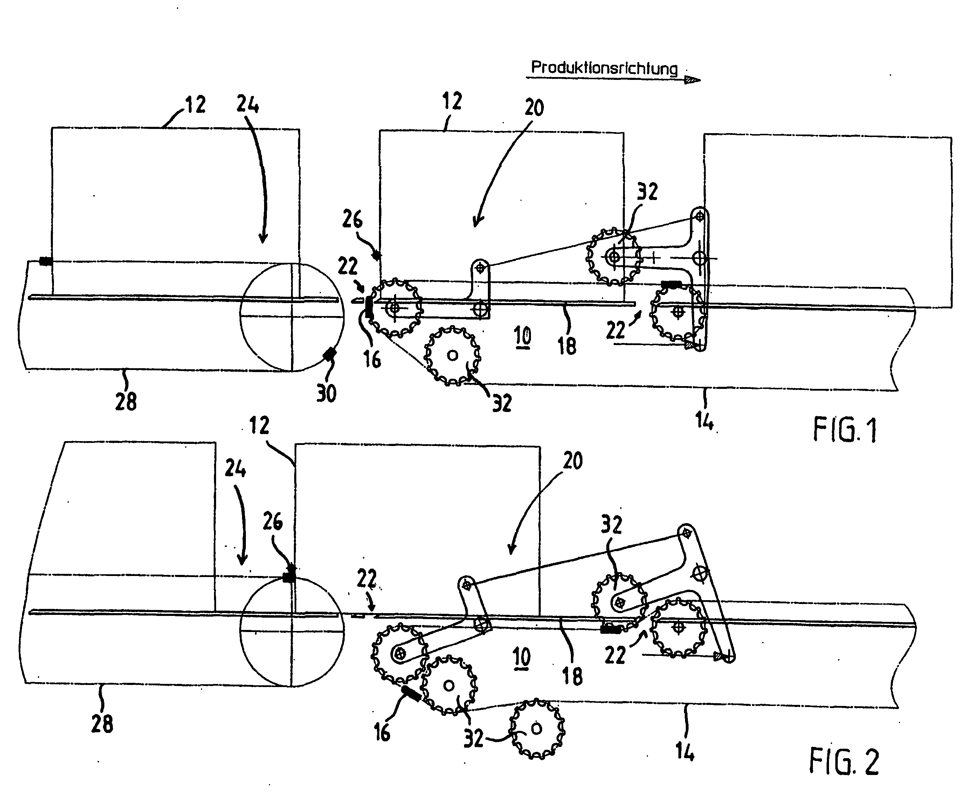

In Fig. 1 und Fig. 2 sind schematisch der Auslaufbereich 24 einer Zusammentragmaschine, der Schieber 26 eines Übergabesystems und die Einfuhrvorrichtung 10 einer Klebebindemaschine sowie mehrere Buchblöcke 12 dargestellt.

Der Auslaufbereich 24 der Zusammentragmaschine umfasst in bekannter Weise eine Förderkette 28 mit daran angelenkten Mitnehmerleisten 30.

Die Einfuhrvorrichtung 10 besteht aus einer endlosen umlaufend angetriebenen Förderkette 14 mit daran angelenkten Mitnehmerleisten 16, aus einer die aufrecht stehenden Buchblöcke 12 im Rücken stützenden Auflage 18 und aus seitlichen hier nicht dargestellten Führungen.

Die Förderkette 14 wird über Kettenräder 32 geführt, die derart an der Einfuhrvorrichtung 10 angelenkt sind, dass sie über hier nicht dargestellte Betätigungsmittel in eine Position bringbar sind, in der die Förderkette 14 mit den daran angelenkten Mitnehmerleisten 16 im Einlaufbereich 20 unterhalb der Auflage 18 weiterlaufen. Weiterhin sind Öffnungen 22 in der Auflage 18 vorgesehen, durch die die Mitnehmerleisten 16 hindurchtreten können. -

Fig. 1 zeigt die Förderkette 14 in ihrer ursprünglichen Position. Buchblöcke 12 werden aus dem Auslaufbereich 24 der Zusammentragmaschine mittels des Schieber 26 des Übergabesystems auf die Auflage 18 im Einlaufbereich 20 der Einfuhrvorrichtung 10 befördert. Dort hintergreifen die Mitnehmerleisten 16 der Förderkette 14 die Buchblöcke 12 und befördern sie weiter.

Beim Auftreten einer Störung an der Vormaschine oder am Übergabesystem ist die Förderkette 14 im Einlaufbereich 20 der Einfuhrvorrichtung 10 nach unten kippbar.

Fig. 2 zeigt die Förderkette in gekippter Position. Die Mitnehmerleisten 16 der Förderkette 14 laufen nunmehr im Einlaufbereich 20 der Einfuhrvorrichtung 10 unterhalb der Auflage 18 weiter und setzen ihren Weg erst hinter diesem Bereich 20 oberhalb der Auflage 18 fort.

Beim Wiederanlaufen der Zusammentragmaschine ist das Förderband 14 der Klebebindemaschine taktsynchron in seine ursprüngliche Position kippbar.

## Patentansprüche

1. Einfuhrvorrichtung (10) zum Transportieren von aus einer Vormaschine, beispielsweise einer Zusammentragmaschine, herausgeführten aus einzelnen Blättern oder Lagen bestehenden ungebundenen Buchblöcken (12) in eine Folgemaschine, beispielsweise eine Klebebindemaschine, mit einem Übergabesystem zwischen Vormaschine und Einfuhrvorrichtung (10) der Folgemaschine, wobei die Einfuhrvorrichtung (10) aus einer endlosen umlaufend angetriebenen Förderkette (14) mit daran angelenkten Mitnehmerleisten (16), aus einer die aufrechtstehenden Buchblöcke (12) im Rücken stützenden Auflage (18) und aus seitlichen Führungen besteht, **dadurch gekennzeichnet, dass** die Förderkette (14) im Einlaufbereich (20) der Einfuhrvorrichtung (10) reversibel in eine nach unten abgewinkelte Position kippbar ist, wobei die Mitnehmerleisten (16) in diesem Bereich (20) unterhalb der Auflage (18) weiterlaufen.

2. Vorrichtung nach Anspruch 1, **dadurch gekennzeichnet, daß** sie eine Steurzung aufweist, die so ausgelegt ist, **dass** die Förderkette (14) bei einer an der Vormaschine oder am Übergabesystem auftretenden Störung automatisch in die nach unten abgewinkelte Position kippbar und nach Behebung der Störung automatisch in ihre ursprüngliche, synchron getaktete Position bringbar ist.

3. Vorrichtung nach Anspruch 1 oder 2, **dadurch gekennzeichnet, dass** die Auflage (18) der Einfuhrvorrichtung (10) Öffnungen (22) aufweist, durch die die Mitnehmerleisten (16) beim Kippen der Förderkette (14) hindurchtreten.

## Claims

1. Insertion device (10) for conveying unbound book blocks (12) comprising individual sheets or layers passed out of a preceding machine, e.g. a gathering machine, into a following machine, e.g. an adhesive binding machine, with a transfer system between the preceding machine and the insertion device (10) of the following machine, the insertion device (10) comprising a continuously rotary driven conveying chain (14) with driving strips (16) articulated thereto, a support (18) supporting the back of the upright book blocks (12) and lateral guides, **characterised in that** the conveying chain (14) in the entry area (20) of the insertion device (10) can be reversibly tilted into a downwardly angled position, the driving strips (16) running on in said area (20) below the support (18).

2. Device according to claim 1, **characterised in that** it has a control designed in such a way that the conveying chain (14) in the case of a fault occurring on the preceding machine or on the transfer system is automatically tiltable into the downwardly angled position and after removing the fault can be automatically brought into its original, synchronously timed position.

3. Device according to claim 1 or 2, **characterised in that** the support (18) of the insertion device (10) has openings (22) through which the driving strips (16) pass on tilting the conveying chain (14).

## Revendications

1. Dispositif d'introduction (10) servant à transporter des corps d'ouvrage (12) non reliés, composés de feuilles ou de couches isolées, ayant été éjectés d'une machine d'entrée, par exemple d'une assembleuse, vers une machine suivante, par exemple une machine à relier à la colle, avec un système de transfert entre la machine d'entrée et le dispositif d'introduction (10) de la machine suivante, le dispositif d'introduction (10) étant constitué d'une chaîne de transport (14) sans fin, entraînée en rotation, sur laquelle sont articulées des baguettes d'entraînement (16), d'un support (18) soutenant les corps d'ouvrage (12) en position droite par l'arrière et de guidages latéraux, **caractérisé en ce que** la chaîne de transport (14), dans la zone d'entrée de la chaîne de transport, peut être basculée de manière réversible dans une position coudée vers le bas, les baguettes d'entraînement (16) continuant, dans cette zone (20), à courir au-dessous du support (18).

2. Dispositif selon la revendication 1, **caractérisé en ce qu****'**il présente une commande conçue de manière qu'en cas de défaillance survenant au niveau de la machine d'entrée ou du système de transfert, la chaîne de transport (14) puisse être automatiquement basculée en position coudée vers le bas et qu'elle puisse automatiquement être replacée dans sa position initiale cadencée synchrone une fois la défaillance éliminée.

3. Dispositif selon la revendication 1 ou 2, **caractérisé en ce que** les baguettes d'entraînement (16) passent à travers des ouvertures (22) prévues dans le support (18) du dispositif d'introduction (10) lorsque la chaîne de transport est basculée.
